# EUROPÄISCHE PATENTANMELDUNG

(11) **EP 0 880 876 A2**
(43) Veröffentlichungstag der Anmeldung: **02.12.1998**
(21) Anmeldenummer: 98201742.8
(22) Anmeldetag: 25.05.1998
(51) Int. Cl.: A01C 3/04

(54) **Ladegerät für Schüttgut, insbesondere Dünger**

(30) Priorität: 29.05.1997 IT BZ970028
(71) Anmelder: Folie, Martin, 39020 S. Valaentino Alla Muta, (Bolzano) (IT)
(72) Erfinder: Folie, Martin, 39020 S. Valaentino Alla Muta, (Bolzano) (IT)
(74) Vertreter: Faraggiana, Vittorio, Dr. Ing.

(57) **Zusammenfassung**

Beschrieben wird ein Ladegerät für Schüttgut, insbesondere Dünger, umfassend Organe zum Ergreifen dieser Stoffe.

Das Ladegerät besteht aus einem festliegenden Aufbau (2, 3), in dem mindestens eine Zwangsführung (9) vorgesehen ist, wobei sich jede Zwangsführung (9) in einer Ebene befindet, die zu den eventuell weitere Zwangsführungen (9) derselben Ausbildung enthaltenden Ebenen parallel ist, wobei in jeder Zwangsführung mindestens ein Tragelement (14, 15; 16, 17) gleitet, das jeweils eine Stange (20) trägt, die gegenüber einer Mitte (10) des festen Aufbaus (2, 3) durch einen Mantel (22) einer Trommel (21) radial hindurchgeführt ist, die durch den festliegenden Aufbau (2, 3) derart drehbar getragen wird, daß sie um die Mitte (2, 10) herumgedreht wird, wobei jede Stange (20) an ihrem freien Ende ein Greiforgan trägt.

## Beschreibung

Die vorliegende Erfindung bezieht sich auf ein Ladegerät für Schüttgut, insbesondere Dünger, gemäß dem einleitenden Teil des Anspruches 1.

Bekannt ist die Schwierigkeit, beim Laden von Dünger sowohl in Ställen als auch z.B. in Hofstellen den Dünger aufzunehmen und an eine andere gewünschte Stelle z.B. auf das Feld zu bringen. Bis jetzt war dieser Vorgang sehr aufwendig, da Mistgabeln verwendet werden mußten, um den Dünger vom Misthaufen herauszuziehen. Diese Gabein konnten klarerweise auch die Gabein eines von einem Traktor getragenen Gerätes sein. Die gesamten Systeme bekannter Art erlaubten daher den Dünger nur diskontinuierlich mit dem daraus folgenden Zeitverlust und Arbeitsaufwand zu ergreifen und anzuheben.

Die Anbaugeräte bekannter Art sowohl mit Greifern als auch mit Schaufeln mußten von einem Traktor aus gesteuert werden und erforderten viel Platz für die Manovrierfähigkeit, der in einem Stall beispielsweise nicht immer gegeben ist.

Die Aufgabe der vorliegenden Erfindung liegt daher darin, den Loslösungs-, Abnahme- und Hubvorgang des Düngers automatisch zu gestalten, um ihn sowohl auf ein bewegtes Fördermittel als auch auf eine Ladeebene eines Transportmittels zu bringen. Der Ladevorgang kann überdies innerhalb beengter Stellen erfolgen.

Diese und weitere Aufgaben werden durch Ladegeräte von Schüttgut, insbesondere von Dünger mit den im kennzeichnenden Teil des Anspruchs 1 angegebenen Merkmalen gelöst.

Durch Vorsehen einer Drehtrommel, an der sich während der Drehung der Trommel Greifmittel auf- und abbewegen, können die Greifmittel zunächst in den Düngerhaufen eingestochen werden, um Teile desselben abzulösen und sie längs eines Teils des Trommelumfangs derart mitzureißen, daß das Material auf eine zweckmäßige Höhe gebracht werden kann, um es z.B. auf einem Bandförderer abzulegen, der seinerseits den Transport auf einem weiteren Fördermittel vorsieht oder es auf eine Ladeebene eines Transportmittels fallen läßt.

In einer ersten Ausführungsform des Ladegerätes bestehen die Greifmittel aus Schaufeln, die gegenüber der Umfangsfläche der Trommel auf- un abbewegt werden und von Stangen getragen werden, die in der Umfangsfläche der Trommel selbst gleitbar geführt sind und bei der Anhebung und Absenkung radial von einer zur Drehachse der Trommel außermittigen Zwangsführung bewegt werden.

In einer Variante besteht diese Zwangsführung aus einer Kulisse, die aus zwei gegenüberliegenden Bahnen gebildet wird, die in zwei gegenüberliegenden an einer gemeinsamen Achse festliegenden Platten ausgenommen sind, wobei in den beiden Bahnen jeweils mindestens eine Rolle abrollt, die den Anlenkbolzen der Stange trägt, die zwischen den beiden Platten läuft, um sich radial außerhalb der Umfangsfläche der Trommel zu erstrecken.

In einer weiteren Variante, besteht die Zwangsführung einfach aus einem Nocken, auf dem die Basis der Stange gleitet, wobei die Stange derart federbelastet ist, daß sie auf den Nocken gedrückt wird.

Für alle Lösungen kann vorgesehen sein, daß die Trommel durch zweckmäßige Getriebe bekannter Art angetrieben werden.

Weitere Varianten und Fortbildungen des erfindungsgemäßen Gerätes gehen aus den weiteren abhängigen Ansprüchen hervor.

Zur besseren Erklärung des Erfindungsgedankens, wird von demselben eine bevorzugte Ausführungsform beschrieben, die in der beigelegten Zeichnung dargestellt ist. Es zeigen,

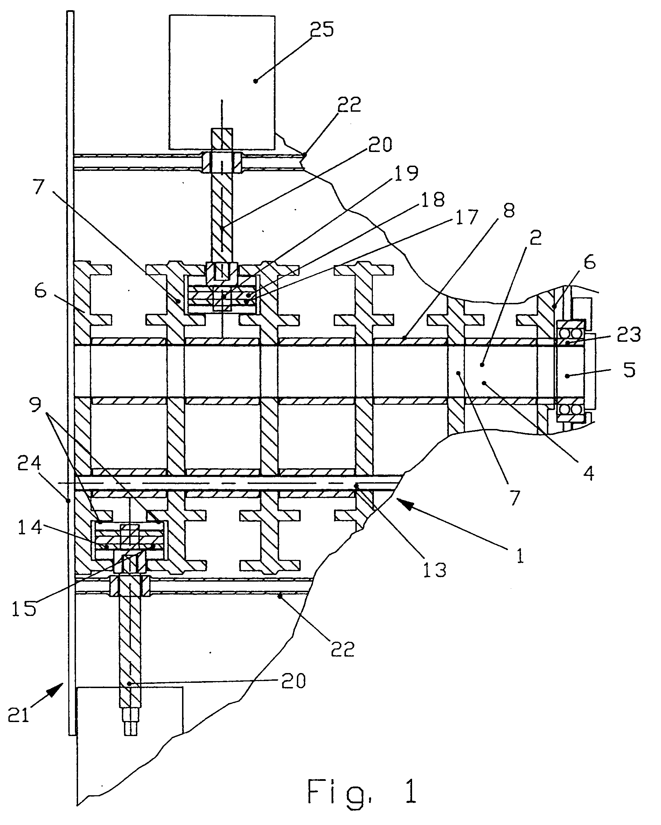

- Figur 1: einen teilweisen Axialschnitt durch das erfindungsgemäße Ladegerät;

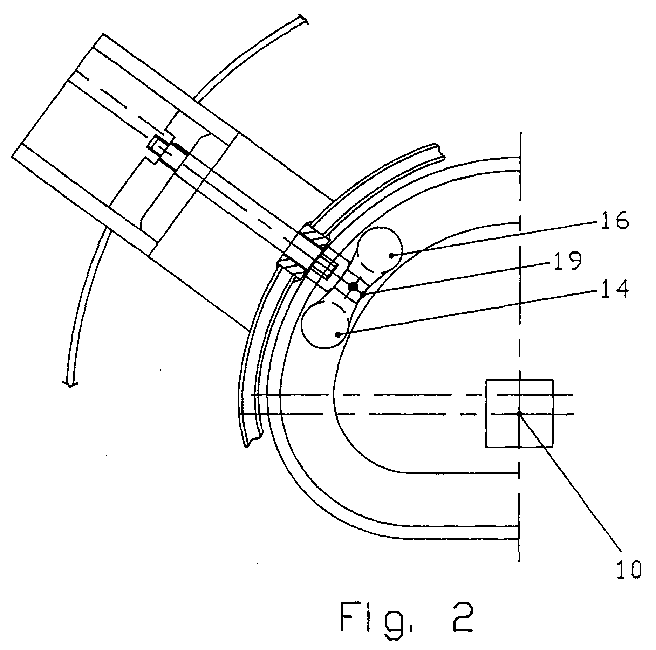

- Figur 2: einen teilweisen Radialschnitt des Gerätes aus Figur 1; und

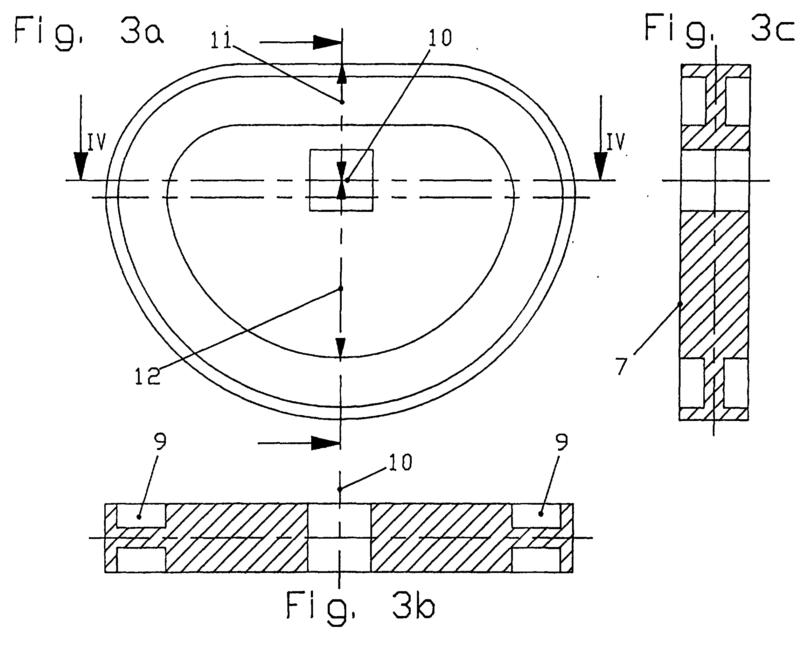

- Figur 3a, 3b und 3c: jeweils die Kulissenführung des erfindungsgemäßen Gerätes, in Stirnansicht und in zwei Schnitten gemäß den Schnittlinien IV-IV und V-V.

In den Figuren ist mit der Bezugsziffer 1 insgesamt ein Ladegerät 1 angegeben. Dieses ist mit einer Welle 2 versehen, die starr von einem Rahmen 3 getragen wird, der seinerseits durch ein nicht gezeigtes Fortbewegungsmittel getragen wird.

Die Welle 2 weist bevorzugter Weise einen vieleckigen Schnitt auf, im vorliegenden Fall viereckig, der in einen kreisrunden Schnitt 5 an ihren Enden übergeht.

Auf der Welle 2 sind senkrecht zu derselben mit Formschluß 2 Endplatten 6 und eine Vielzahl von Innenplatten 7 angeordnet, die voneinander durch Distanzbüchsen 9 beabstandet sind. Die Platten 6 und 7 sind untereinander und an den Büchsen 8 mittels einer die Platten selbst durchdringenden Zugstange 13 gespannt.

Jede Innenplatte 7 weist an ihren abgewandten Stirnseiten und jede Endplatte 6 auf ihrer zu den Innenplatten 7 gewandten Stirnseite jeweils eine Kulissenbahn 9 auf, die gegenüber der der auf der Achse 2 liegenden Mitte 10 mit einer konstanten Außenmittigkeit 11 für einen vorgegebenen Laufabschnitt und einer veränderbaren Außermittigkeit 12 für den Rest des Laufabschnittes liegt.

In jedem Paar von Kulissenbahnen 9 sind jeweils Paare von Rollen 14, 15 und 16, 17 gleitbar aufgenommen, von denen jedes durch einen Bolzen 18 getragen wird, der seinerseits durch eine Lasche 19 getragen wird, der die beiden Rollenpaare wagenartig verbindet.

An jeder Lasche ist eine Stange 20 angelenkt, die radial außerhalb einer Trommel 21 durch den Umfangsmantel 22 derselben hindurchgeführt ist. Am äußeren Ende trägt jede Stange 20 ein Greiforgan in der Form einer Schaufel 25.

Jede Trommel 21 weist zwei Endscheiben 24 auf, die über ein Lager 23 an den Endabschnitten der Welle 2 mit kreisrundem Querschnitt 5 drehbar getragen werden. Somit nimmt die Drehtrommel die Stangen rund um die Mitte 10 mit, die ihrerseits durch die Bewegung der Kulissenbahn 9 dazu gezwungen werden, sich auf- und abwärts zu bewegen.

Es ist klar, daß anstelle der Kulissenbahn 9 auch jede andere Art von Zwangsführung vorgesehen sein könnte, wie z.B. ein Nocken, auf dem jede Stange 20 beispielsweise über eine Druckfeder federbelastet ist. Auch die Greifmittel könnten eine beliebige der Arbeit angepaßte Ausbildung besitzen.

## Patentansprüche

1. Ladegerät für Schüttgut, insbesondere Dünger, umfassend Organe zum Ergreifen dieser Stoffe, dadurch gekennzeichnet, daß es aus einem festliegenden Aufbau (2, 3) besteht, in dem mindestens eine Zwangsführung (9) vorgesehen ist, wobei sich jede Zwangsführung (9) in einer Ebene befindet, die zu den eventuell weitere Zwangsführungen (9) derselben Ausbildung enthaltenden Ebenen parallel ist, wobei in jeder Zwangsführung mindestens ein Tragelement (14, 15; 16, 17) gleitet, das jeweils eine Stange (20) trägt, die gegenüber einer Mitte (10) des festen Aufbaus (2, 3) durch einen Mantel (22) einer Trommel (21) radial hindurchgeführt ist, die durch den festliegenden Aufbau (2, 3) derart drehbar getragen wird, daß sie um die Mitte (2, 10) herumgedreht wird, wobei jede Stange (20) an ihrem freien Ende ein Greiforgan trägt.

2. Ladegerät nach Anspruch 1, dadurch gekennzeichnet, daß die Greiforgane (25) durch Schaufeln gebildet werden.

3. Ladegerät nach den vorstehenden Ansprüchen, dadurch gekennzeichnet, daß die Zwangsführung durch eine Kulisse (9) gebildet ist.

4. Ladegerät nach Anspruch 3, dadurch gekennzeichnet, daß die Kulisse (9) durch zwei aneinander gegenüberliegenden Platten (6, 7) gebildet ist, die an einer gemeinsamen Achse (2) festliegen, wobei auf den beiden Bahnen (9) jeweils eine Rolle (14, 15; 16, 17) abrollt, in der ein Anlenkbolzen der Stange (20) gelagert ist, die zwischen den beiden Platten (6, 7) verläuft, um sich radial von der Umfangsfläche (22) der Trommel (21) zu erstrecken und am freien Ende das Greiforgan (25) zu tragen.

5. Ladegerät nach den vorstehenden Ansprüchen, dadurch gekennzeichnet, daß die Zwangsführung durch einen Nocken gebildet ist, auf dem die Basis der Stange gleitet, wobei die Stange federbelastet ist, um auf den Nocken gedrückt zu werden.

6. Ladegerät nach den vorstehenden Ansprüchen, dadurch gekennzeichnet, daß die Trommel (21) durch Getriebe bekannter Art in Drehbewegung gesetzt wird.
